(19) Europäisches Patentamt
European Patent Office
Office européen des brevets

(11) **EP 4 495 193 A1**

(12) **EUROPEAN PATENT APPLICATION**

(43) Date of publication:
22.01.2025 Bulletin 2025/04

(21) Application number: 23186743.3

(22) Date of filing: 20.07.2023

(51) International Patent Classification (IPC):
*C09D 5/00* (2006.01)    *C09D 5/02* (2006.01)
*C09D 7/40* (2018.01)

(52) Cooperative Patent Classification (CPC):
C09D 5/00; C09D 5/024; C09D 7/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **PPG Europe B.V.
1047 BB Amsterdam (NL)**

(72) Inventors:
• **NONCLERQ, Aurelie
1422AD Uithoorn (NL)**
• **TANG, Shunjia
1422AD Uithoorn (NL)**

(74) Representative: **Appleyard Lees IP LLP
15 Clare Road
Halifax HX1 2HY (GB)**

(54) **COATING COMPOSITION**

(57) The present disclosure relates to an aqueous coating composition comprising a polymeric binder, an alkali-soluble oligomer, and optionally at least one additive, wherein the alkali-soluble oligomer has an acid value (AV) of from 160 to 300 mg. The disclosure extends to a method of coating a substrate, the coating being derived from said aqueous coating composition. The disclosure further extends to a substrate having a coating thereon, said coating being derived from said aqueous coating composition. The disclosure further extends to the use of an alkali-soluble oligomer having an acid value (AV) of greater than 160 mg KOH/g to extend the open time of an aqueous coating composition.

## Description

<u>Field of the Invention</u>

The present invention relates to an aqueous coating composition comprising a polymeric binder and an alkali-soluble oligomer.

<u>Background of the Invention</u>

Reducing the content of volatile organic compounds (VOC) such as solvents in coating compositions has been a significant area of recent research and development due to, amongst other reasons, regulations that limit VOC content of commercial coatings and coating compositions. Low or zero VOC coating compositions have many advantages ranging from health and safety to material properties. For example, low or zero VOC paints may have low odour and lower impact on air quality, they may be less toxic, they may be easier to clean, and they may be less environmentally polluting.

One method of reducing VOC content involves replacing organic solvent with water. However, aqueous coating composition performance standards ideally need to align or exceed that expected of solvent-based coating compositions. In some areas, there is a need to improve performance metrics.

There is a general need when applying a coating to a substrate that imperfections or irregularities in an applied coating layer are repairable and a uniform finish attainable after a period of time has elapsed where said coating is still wet, that is, not fully dried. For example, the applied coating could be re-brushed but still provide a uniform finish. Alternatively and/or additionally further coating composition could be applied to the same coat. In other words, further coating composition could be worked into an area previously having applied thereon a coating composition in a uniform manner. The length of time a coating composition remains "wet" or "open" enough to allow for such brush-in and repair is known as "open time". A coating composition that dries very quickly has a low open time and often causes difficulty in final appearance of painted areas.

There is a general need when applying a coating to a substrate to provide a high quality finish with excellent appearance and aesthetics, particularly with respect to coatings being free from cissing, cratering, fish-eyes, clouds and the like and are level and smooth. One method to provide a quality finish is to include flow-and-levelling agents in coating compositions. However, the inclusion of significant amounts of flow-and-levelling agents in order to obtain a good appearance may also create adverse effects. For example, such applied coating could suffer from layer-to-layer adhesive issues, and/or could suffer from roughening of surfaces especially in recoated films, and/or could suffer from separation of the flow-and-levelling agents in coatings are often observed. Coating compositions that provide a high quality finish without the need to include significant amounts of flow-and-levelling agents, or coating compositions devoid of flow-and-levelling agents, can be advantageous.

It is an object of aspects of the present invention to address one or more of the above-mentioned problems.

<u>Summary of the Invention</u>

According to the present invention there is provided an aqueous coating composition comprising a polymeric binder, an alkali-soluble oligomer, and optionally at least one additive, wherein the alkali-soluble oligomer has an acid value (AV) of from 160 to 300 mg KOH/g.

There is also provided a method for coating a substrate comprising applying to at least a portion of a substrate an aqueous coating composition, said aqueous coating composition comprising a polymeric binder, an alkali-soluble oligomer, and optionally at least one additive, wherein the alkali-soluble oligomer has an acid value (AV) of from 160 to 300 mg KOH/g.

There is also provided a substrate having a coating thereon, the coating being derived from an aqueous coating composition, said aqueous coating composition comprising a polymeric binder, an alkali-soluble oligomer, and optionally at least one additive, wherein the alkali-soluble oligomer has an acid value (AV) of from 160 to 300 mg KOH/g.

There is also provided a use of an alkali-soluble oligomer having an acid value (AV) of greater than 160 mg KOH/g to extend the open time, as determined by ASTM D7488-11, of an aqueous coating composition, the aqueous coating composition comprising a polymeric binder, an alkali-soluble oligomer, and optionally at least one additive, wherein the alkali-soluble oligomer has an acid value (AV) of from 160 to 300 mg KOH/g.

There is also provided a use of an alkali-soluble oligomer having an acid value (AV) of greater than 160 mg KOH/g to improve levelling, as determined by ASTM D4062-11, of an aqueous coating composition, the aqueous coating composition comprising a polymeric binder, an alkali-soluble oligomer, and optionally at least one additive, wherein the alkali-soluble oligomer has an acid value (AV) of from 160 to 300 mg KOH/g.

Detailed Description of the Invention

According to the present invention there is provided an aqueous coating composition, as set forth in the appended claims. Also provided is a method, a substrate, and a use. Other features of the invention will be apparent from the dependent claims, and the description that follows.

*Coating Composition*

The aqueous coating composition comprises:

(a) a polymeric binder;
(b) an alkali-soluble oligomer;
(c) optionally at least one additive;

wherein the alkali-soluble oligomer has an acid value (AV) of from 160 to 300 mg KOH/g.

*Polymeric Binder*

The aqueous coating composition comprises a polymeric binder.
The polymeric binder may comprise at least one material selected from an acrylic material, a polyurethane material, a vinyl acetate material, a polyurethane-acrylic material, an epoxy material, a styrene-acrylic material, a styrene-butadiene material, a polystyrene material, a vinyl acrylic material, a vinyl acetate-ethylene material, an alkyd-acrylic and an alkyd material.
The polymeric binder may comprise at least one material selected from an acrylic material, a polyurethane-acrylic material, a styrene-acrylic material, and an alkyd-acrylic material.
The polymeric binder may comprise an acrylic and/or vinyl acrylic material. The acrylic material may comprise the reaction product of a reaction mixture comprising one or more acrylic monomer(s). Suitable acrylic monomers will be known to a person skilled in the art. Suitable acrylic monomers include, but are not limited to, alkyl (alk)acrylate, such as $C_1$ to $C_6$ alkyl ($C_1$ to $C_6$ alk)acrylate, for example, $C_1$ to $C_6$ alkyl (meth)acrylate, and (alk)acrylic acid, such as ($C_1$ to $C_6$ alk) acrylic acid. The acrylic monomer may comprise a functional group, such as an epoxy group. For example, the acrylic monomer may comprise glycidyl methacrylate.
The terms "(alk)acrylate", "(meth)acrylate", and like terms as used herein, are used conventionally and refer to both alkacrylate and acrylate, such as methacrylate and acrylate.
Examples of suitable acrylic monomers include, but are not limited to, acrylic acid, methacrylic acid, methyl acrylate; methyl methacrylate; ethyl acrylate; ethyl methacrylate; propyl acrylate; propyl methacrylate; isopropyl methacrylate, butyl acrylate, including n-butyl acrylate, isobutyl acrylate, sec-butyl acrylate and tert-butyl acrylate; butyl methacrylate, including n-butyl methacrylate, sec-butyl methacrylate, isobutyl methacrylate and tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, decyl acrylate, decyl methacrylate, isodecyl acrylate, isodecyl methacrylate, lauryl acrylate, lauryl methacrylate, octyl acrylate, octyl methacrylate, nonyl acrylate, nonyl methacrylate, isobornyl acrylate, isobornyl methacrylate, hydroxyethyl acrylate, hydroxyethyl methacrylate, hydroxypropyl methacrylate, hydroxypropyl acrylate, phenoxy ethyl acrylate, 2-ethylhexyl acrylate, 2-ethylhexyl methacrylate, glycidyl methacrylate; the reaction product of (meth)acrylic acid reacted with an epoxy, such as the reaction product of (meth)acrylic acid reacted with Cardura (RTM) E10P glycidyl ester; ethylene glycol diacrylate; ethylene glycol dimethacrylate; 1,6-hexanediol diacrylate; 1,6-hexanediol dimethacrylate; 4-hydroxybutyl acrylate; 4-hydroxybutyl methacrylate; allyl methacrylate; benzyl acrylate; benzyl methacrylate; phosphate esters of 2-hydroxyethyl methacrylate; those sold under the trade name SIPOMER commercially available from Solvay) such as, for example SIPOMER PAM-100, SIPOMER PAM-200 and SIPOMER PAM-300 (phosphate esters of polypropylene glycol monoacrylate); and SIPOMER WAM, SIMPOMER WAM II and SIPOMER WAM E W50 (methacrylic monomer based on 46-50% methacrylamidoethyl ethylene urea), ureido (meth) acrylate (commercially available from BASF), rosin (meth)acrylate, cardanyl (meth)acrylate, cardanol (meth)acrylate, acrylamides such as, for example, acrylamide methacrylamide, N,N-dimethylacrylamide, N-ethylacrylamide, N-hydroxyethyl acrylamide, diacetone acrylamide, N,N-diethylacrylamide, N-isopropylacrylamide and N-isopropylmethacrylamide; 2-acrylamido-2-methyl-1-propanesulfonic acid; silane-functional (alk)acrylic acids and/or (alk)acrylates such as, for example, 3-(trimethoxysilyl)propyl methacrylate (also known as silane A174, commercially available from Sigma Aldrich) and 3-(trimethoxysilyl)propyl acrylate (commercially available from Sigma Aldrich); and combinations thereof. Any other acrylic monomers known to those skilled in the art could also be used.
The acrylic monomer may comprise a hydroxyl functional acrylic monomer. The acrylic monomer may comprise a hydroxyl functional alkyl(alk)acrylate, for example, hydroxyl functional $C_1$ to $C_6$ alkyl ($C_1$ to $C_6$ alk)acrylate, such as

hydroxyl functional $C_1$ to $C_6$ alkyl (meth)acrylate or hydroxyl functional $C_1$ to $C_6$ alkyl ($C_1$ to $C_6$ alk)acrylate. Examples of suitable hydroxyl functional acrylic monomer(s) include, but are not limited to, hydroxyethyl acrylate, hydroxyethyl methacrylate, hydroxymethyl acrylate, hydroxymethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyl acrylate, hydroxyhexyl methacrylate, methyl 2-(hydroxymethyl)acrylate ethyl 2-(hydroxymethyl)acrylate, polyethylene glycol methacrylate and/or polypropylene glycol methacrylate. The hydroxyl functional acrylic monomer may comprise hydroxyethyl acrylate, hydroxyethyl methacrylate, the reaction product of (meth)acrylic acid reacted with an epoxy, such as the reaction product of (meth)acrylic acid with Cardura (RTM) E10P glycidyl ester, polyethylene glycol methacrylate and/or polypropylene glycol methacrylate.

The acrylic monomer may comprise two or more acrylate groups. For example, the acrylic monomer may comprise two, three, four or more acrylate groups. For the avoidance of doubt, by "acrylate group", and like terms as used herein, is meant salts and esters of acrylic acid, i.e. monomers having the structure R-C=CCOO-$R^1$, wherein R represents hydrogen, alkyl, alkenyl alkynyl, aralkyl or aryl and $R^1$ represents hydrogen, alkyl, alkenyl alkynyl, aralkyl or aryl. The acrylic monomer may comprise a di(alk)acrylate. Suitable di(alk)acrylates will be known to a person skilled in the art. Examples of suitable di(alk)acrylates include, but are not limited to, ethylene glycol diacrylate, ethylene glycol dimethacrylate, 1,2-propanediol diacrylate, 1,3-propanediol diacrylate, 1,3-butanediol diacrylate, 1,4-butanediol diacrylate, 1,2-petanediol diacrylate, 1,3-petanediol diacrylate, 1,5-petanediol diacrylate, 1,2-hexanediol diacrylate, 1,3-hexanediol diacrylate, 1,4-hexanediol diacrylate, 1,6-hexanediol diacrylate, 1,2-propanediol dimethacrylate, 1,3-propanediol dimethacrylate, 1,3-butanediol dimethacrylate, 1,4-butanediol dimethacrylate, 1,2-petanediol dimethacrylate, 1,3-petanediol dimethacrylate, 1,5-petanediol dimethacrylate, 1,2-hexanediol dimethacrylate, 1,3-hexanediol dimethacrylate, 1,4-hexanediol dimethacrylate, 1,6-hexanediol dimethacrylate and combinations thereof. The acrylic monomer may comprise a tri(alk)acrylate. Suitable tri(alk)acrylates will be known to a person skilled in the art. Examples of suitable tri(alk)acrylates include, but are not limited to, trimethylolpropane triacrylate, trimethylolpropane trimethacrylate and combinations thereof.

The reaction mixture from which the acrylic material is formed may further comprise one or more additional ethylenically unsaturated monomer(s). Suitable additional ethylenically unsaturated monomers will be known to a person skilled in the art. Examples of suitable additional ethylenically unsaturated monomers include, but are not limited to, aryl substituted ethylenically unsaturated monomers such as, for example, styrene, alpha-methyl styrene, 3,4-alpha-methyl styrene, 2-methyl styrene, 4-methyl styrene (vinyl toluene), 2,3-dimethyl styrene, 2-ethyl styrene, 4-tertbutylstyrene, 4-methoxystyrene, 4-phenylstyrene, 4-phenoxy styrene, 4-propyl styrene, 4-benzylstyrene, 4-cyclohexyl styrene, 4-dodecyl styrene, 4-(phenyl butyl)styrene, 2-methyl-4-isopopyl styrene, 2-ethyl-4-benzyl styrene, 4-chlorostyrene, 2,5-dichlorostyrene, 3,4-dichlorostyrene, 2,6-dichlorostyrene, 4-fluorostyrene, divinylbenzene, isopropyl styrene, t-butyl styrene, trans-beta-styrene, chloromethylstyrene, 4-hydroxystyrene, diglycidyloxymethylstyrene, 2,4-diglycidyloxymethylstyrene, 2,5-diglycidyloxymethylstyrene, 2,6-diglycidyloxymethylstyrene, 2,3,4-triglycidyloxymethylstyrene, 2,3,5-triglycidyl oxime styrene, 2,3,6-triglycidyloxymethylstyrene and 3,4,5-triglycidyloxymethylstyrene, 2,4,6-triglycidyloxymethylstyrene, unsaturated carboxylic acids or diacids (or anhydrides) such as, for examples, maleic acid (or anhydride) and itaconic acid (or anhydride), ethylenically unsaturated nitriles such as, for example, acrylonitrile or methacrylonitrile, vinyl esters such as, for example, vinyl acetate and vinyl propionate, alkenes, such as $C_2$ to $C_6$ alkenes, for example, ethene, propene, 1-butene, 2-butene, 1-pentene, 2-pentene, 1-hexene, 2-hexene, 3-hexene, 1-hetpene, 2-heptene, 3-heptene, 1-octene, 2-octene, 3-octene, 4-octene and isobutylene, vinyl chloride, butadiene, isoprene, chloroprene, N-vinyl monomers such as, for example, N-vinyl pyrrolidone, N-vinyl caprolactam and N-vinyl acetamide, unsaturated fatty acid ester; allyl glycidyl ether, allyl ethyl ether, vinyl ether monomers such as, for example, methyl vinyl ether, ethyl vinyl ether, n-propyl vinyl ether, isopropyl vinyl ether, n-butyl vinyl ether, isobutyl vinyl ether, t-butyl vinyl ether, pentyl vinyl ether, cyclopentyl vinyl ether, hexyl vinyl ether, cyclohexyl vinyl ether, 2-ethylhexyl vinyl ether, 2-hydroxyethyl vinyl ether, 4-hydroxybutyl vinyl ether, 1,4-butanediol divinyl ether, diethyleneglycol divinyl ether, triethyleneglycol divinyl ether, 1,4-cyclohexanedimethanol divinyl ether, 2-(2-hydroxyethyl) ethyl vinyl ether, octyl vinyl ether, benzyl vinyl ether, phenyl vinyl ether, phenethyl vinyl ether and allyl vinyl ether, vinylphosphoric acid (commercially available from Sigma Aldrich) and combinations thereof. The additional ethylenically unsaturated monomer(s) may comprise monomers, oligomers and/or polymers of the aforementioned monomers. For example, butadiene may be in the form of a monomer or may be in the form of polybutadiene.

The additional ethylenically unsaturated monomer(s) may comprise terpene monomers or derivatives thereof, rosin monomers or derivatives thereof, cardanol monomers or derivatives thereof. Examples of suitable terpene monomers or derivatives thereof include, but are not limited to, monoterpenes such as, for example, α-pinene, β-pinene, camphene, sabinene, limonene and myrcene, sesquiterpenes such as, for example, bisabolene and nerolidol, and diterpenes. Examples of suitable rosin monomers or derivates thereof include, but are not limited to, rosin, rosin acids, abietic acid, neabietic acid, palustric acid, pimaric acid, levopimaric acid, maleopimaric acid, fumaropimaric acid, isopimaric acid, rosin-formaldehyde resin, rosin alcohol and rosin phenol. Examples of suitable cardanol monomers or derivatives thereof of include, but are not limited to cardanol, anacardic acid, cardanol glycidyl ether, cardanol-formaldehyde resin, cardanol epoxies, cardanol phenols and cardanol alcohols.

The additional ethylenically unsaturated monomer may comprise a hydroxyl functional ethylenically unsaturated monomer. The hydroxyl functional ethylenically unsaturated monomer may comprise N-hydroxyethyl acrylamide, 2-hydroxyethyl vinyl ether, 4-hydroxybutyl vinyl ether, 2-(2-hydroxyethyl) ethyl vinyl ether, and/or hydroxystyrene. The hydroxyl functional ethylenically unsaturated monomer may comprise the reaction product of (meth)acrylic acid with an epoxy (such as Cardura E10) and/or the reaction product of glycidyl methacrylate with a carboxylic acid functional component (such as a benzoic acid and/or an aliphatic acid, such as a $C_2$-$C_{20}$ aliphatic acid, for example).

The acrylic material may comprise any suitable amount of acrylic monomer. It will be appreciated that the acrylic material comprises at least one acrylic monomer.

The polymeric binder may comprise a copolymer material. It will be appreciated that a copolymer material comprises at least two types of monomer, such as at least three types of monomer.

The polymeric binder may comprise a vinyl acetate-ethylene material. Such materials are well-known in the art and need not be further described herein, but generally comprise a copolymer of vinyl acetate and ethylene.

The acrylic material may comprise a vinyl acrylic material. For example, the vinyl acrylic material may comprise monomers such as vinyl acetate and vinyl propionate, particularly vinyl acetate.

The polymeric binder may comprise polystyrene. The polymeric binder may comprise copolymers comprising styrene, such as styrene-acrylic materials or styrene-butadiene materials.

The acrylic material may comprise at least 10 wt%, such as at least 20 wt%, such as at least 30 wt%, such as at least 40 wt%, such as at least 50 wt%, such as at least 60 wt%, such as at least 70 wt%, such as at least 75 wt% acrylic monomer, such as at least 80 wt%, such as at least 85 wt%, such as at least 90 wt%, such as at least 95 wt%, such as at least 97 wt%, such as at least 98 wt%, such as at least 99 wt%, or even >99 wt%, for example, at least 99.1 wt%, at least 99.5 wt% or at least 99.9 wt% acrylic monomer based on the total solid weight of the monomers from which the acrylic material is formed. The acrylic material may comprise 100 wt% acrylic monomer based on the total solid weight of the monomers from which the acrylic material is formed.

The polymeric binder may comprise a polyurethane material. The polyurethane material may comprise a urethane (carbamate) linkage and an imide linkage in the backbone of the polymer.

The polyurethane material may be formed from an imide containing moiety.

The imide containing moiety may contain a cyclic imide group.

The imide containing moiety may be formed as a reaction product between an amine or an isocyanate, such as a diisocyanate, with a cyclic anhydride.

The amine may comprise a primary amine. Examples of suitable amines include, but are not limited to, diamines such as, for example, ethylene diamine, 1,3-propane diamine, tetramethylene diamine, 1,6-hexane diamine, trimethyl hexane-1,6-diamine, isophrone diamine, diaminodiphenylmethane (methylene dianaline), diaminodiphenylether, diaminodiphenylsulphone, methylene-4,4'-cyclohexyl diamine, benzoguanamine, ortho-xylylene diamine, meta-xylylene diamine, para-xylylenediamine, 1,2- cyclohexanediamine and 1,4-cyclohexanediamine; hydroxyamines such as, for example, monoethanol amine and monopropanolamine; aminocarboxylic acids such as, for example, glycine; aminopropionic acids; amino benzoic acids; and combinations thereof.

Examples of suitable isocyanates include, but are not limited to, diisocyanates such as, for example, hexamethylene di-isocyanate, tetramethylene di-isocyanate, isophorone di-isocyanate, methylene-4,4'-bis (cyclohexyl isocyanate), bis-(4-isocyanatocyclohexyl)methane, methylene di phenyl di-isocyanate, bis-(4-isocyanatophenyl)methane, tetramethyl-meta-xylylene di-isocyanate, meta xylylene di-isocyanate, para xylylene di-isocyanate, cyclohexane di-isocyanate, naphthalene di-isocyanate and trimethyl hexamethylene di-isocyanate; and combinations thereof.

Examples of suitable cyclic anhydrides include, but are not limited to, trimellitic anhydride; pyromellitic dianhydride; maleic anhydride; 3,3',4,4'-benzophenonetetracarboxylic dianhydride; tetrahydrophthalic anhydride; 1,4,5,-naphthalenetricarboxylic anhydride; 1,4,5,8-naphthalenetetracarboxylic dianhydride; hemimellitic anhydride; and combinations thereof.

The imide containing moiety may also comprise an acid group and/or an alcohol group. The imide containing moiety may be an acid substituted imide. By "acid substituted imide", and like terms as used herein, is meant an imide containing moiety which comprises at least one carboxylic acid group. The imide containing moiety may also comprise an amine or isocyanate group. Thus, the imide containing moiety may comprise an imide linkage, an acid group and an amine or isocyanate group. For example, such moieties may be formed from the reaction of a trifunctional acid or anhydride thereof, such as trimellitic anhydride, with a diamine or diisocyanate.

The polyurethane material may be formed by reaction of an imide containing moiety, such as one or more of the imide containing moieties described above, with an hydroxyl functional group such as one or more of the alcohols described above, and an isocyanate, such as one or more of the isocyanates described above, to thereby form a polyurethane material.

The polyurethane material may be formed by reaction in the presence of an alcohol, diol, polyol or a component containing at least one alcohol group.

"Polyol" and like terms, as used herein, refers to a compound having two or more hydroxyl groups, such as two, three or four hydroxyl groups. The hydroxyl groups of the polyol may be connected by a bridging group selected from: an alkylene group; an alkenylene group; an alkynylene group; or an arylene group. The polyol may be an organic polyol.

"Diol" and like terms, as used herein, refers to a compound having two hydroxyl groups. The hydroxyl groups of the diol may be connected by a bridging group selected from: an alkylene group; an alkenylene group; an alkynylene group; or an arylene group. The diol may be an organic polyol.

Examples of suitable diols include, but are not limited to, the following: ethylene glycol; 1,2-propane diol; 1,3-propane diol; 1,2-butanediol; 1,3-butandiol; 1,4-butanediol; 2,3-butane diol; 2-methyl-1,3-propane diol; 2,2'-dimethyl-1,3-propanediol; 1,5-pentane diol; 3-methyl-1,5-pentanediol; 1,6-hexane diol; diethylene glycol; triethylene glycol; dipropylene glycol; tripropylene glycol; 2,2,4-trimethyl pentane-1,3-diol; 1,4-cyclohexane dimethanol; tricyclodecane dimethanol; 2,2,4,4-tetramethyl cyclobutane-1,3-diol; isosorbide; 1,4-cyclohexane diol; 1,1'-isopropylidene-bis-(4 -cyclohexanol); polyether diols, such as polyethylene glycol diol, polypropyleneglycol diol and polytetrahydrofuran diol; polysiloxanes diols, such as polydimethylsiloxane diol, polydiphenylsiloxane diol and polymethylphenylsiloxane diol; and combinations thereof.

Examples of suitable polyols include, but are not limited to, the following: tris (hydroxyethyl)isocyanurate; trimethylol propane; trimethylol ethane; 1,2,6-hexane triol; pentaerythritol; erythritol; di-trimethylol propane; di-pentaerythritol; N,N,N',N'-tetra (hydroxyethyl)adipindiamide; N,N,N',N'-tetra (hydroxypropyl)adipindiamide; tri(hydroxy ethyl) amine; hexahydro-1,3,5-tris(hydroxyethyl)-s-triazine; N,N,N',N'-tetrakis-(hydroxyethyl)ethylenediamine; di ethanol amine; or combinations thereof.

The polyurethane material may be formed by reaction in the presence of a carboxylic acid, diacid, polyacid or a component containing at least one carboxylic acid group.

"Polyacid" and like terms, as used herein, refers to a compound having two or more carboxylic acid groups, such as two, three or four carboxylic acid groups. The carboxylic acid groups of the polyacid may be connected by a bridging group selected from: an alkylene group; an alkenylene group; an alkynylene group; or an arylene group. The polyacid may be an organic polyacid.

"Diacid" and like terms as used herein, refers to a compound having two carboxylic acid groups and includes an ester of the diacid (wherein an acid group is esterified) or an anhydride. The carboxylic acid groups of the diacid may be connected by a bridging group selected from: an alkylene group; an alkenylene group; an alkynylene group; or an arylene group. The diacid may be an organic diacid.

Examples of suitable diacids include, but are not limited to, the following: isophthalic acid; terephthalic acid; 1,4-cyclohexane dicarboxylic acid; succinic acid; adipic acid; azelaic acid; sebacic acid; fumaric acid; 2,6-naphthalene dicarboxylic acid; orthophthalic acid. Diacids can also be used in the form of the diester materials, such as: dimethyl ester derivatives such as dimethyl isophthalate; dimethyl terephthalate; dimethyl-1,4-cyclohexane dicarboxylate; dimethyl-2,6-naphthalene dicarboxylate; dimethyl fumarate; dimethyl orthophthalate; dimethylsuccinate; dimethyl glutarate; dimethyl adipate; or combinations thereof.

The term "alk" or "alkyl", as used herein unless otherwise defined, relates to saturated hydrocarbon radicals being straight, branched, cyclic or polycyclic moieties or combinations thereof and contain 1 to 20 carbon atoms, such as 1 to 10 carbon atoms, such as 1 to 8 carbon atoms, such as 1 to 6 carbon atoms, or even 1 to 4 carbon atoms. These radicals may be optionally substituted with a chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, aryl or Het, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as $-CH_3$, becomes methylene, $-CH_2-$, when represented as an alkylene. Other alkylene groups should be understood accordingly.

The term "alkenyl", as used herein, relates to hydrocarbon radicals having, such as up to 4, double bonds, being straight, branched, cyclic or polycyclic moieties or combinations thereof and containing from 2 to 18 carbon atoms, such as 2 to 10 carbon atoms, such as from 2 to 8 carbon atoms, such as 2 to 6 carbon atoms, or even 2 to 4 carbon atoms. These radicals may be optionally substituted with a hydroxyl, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having, such as up to 4, triple bonds, being straight, branched, cyclic or polycyclic moieties or combinations thereof and having from 2 to 18 carbon atoms, such as 2 to 10 carbon atoms, such as from 2 to 8 carbon atoms, such as from 2 to 6 carbon atoms, or even from 2 to 4 carbon atoms. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The polymeric binder may comprise at least one hybrid polymer dispersions and/or composite polymer materials such as polyurethane acrylic dispersions. Such materials are well-known in the art. For example, a hybrid polymer dispersion may be prepared by first preparing independently two aqueous polymer dispersions and then second blending using mechanical mixing. For example, a hybrid polymer dispersion may be prepared by first preparing one polymer dispersion and then effecting a second polymerisation of a separate monomer system in the presence of the first dispersion.

The polymeric binder may comprise an epoxy material.

The epoxy material may comprise any suitable compound. The epoxy material may comprise aliphatic epoxy resins, cyclo-aliphatic epoxy resins and/or aromatic epoxy resins. Examples of suitable epoxy compounds include, but are not limited to, epoxy-functional acrylic resins, 1,2 propanediol diglycidyl ether, 1,4-butanediol diglycidyl ether, 1,6-hexanediol diglycidyl ether, polypropylene glycol) diglycidyl ether, 1,4-cyclohexanedmethanol diglycidyl ether, 1,3-cyclohexanedmethanol diglycidyl ether, 3',4'-epoxycyclohexymethyl-3,4-epoxycyclohexanecarboxylate, 3,4-epoxycyclohexyloxirane, 2-(3',4'-epoxycyclohexyl)-5,1'-spiro-3',4'-epoxycyclohexane-1,3-dioxane, vinyl cyclohexene monoxide, bis(3,4-epoxycyclohexylmethyl) adipate, the diglycidyl ether of cardanol, the diglycidyl ester of phthalic acid, the diglycidyl ester of hexahydrophthalic acid, diglycidyl ether of bisphenol A (DGEBA), solid epoxy resins based on DGEBA, phenoxy resins, the diglycidyl ether of bisphenol F, an epoxy novolac resin, cresol epoxy novolacs and combinations thereof.

The polymeric binder may comprise an alkyd material. Alkyd materials are well-known in the art. The properties of an alkyd material is primarily determined by the nature and the ratios of the alcohols and acids used and by the degree of condensation. Suitable alkyds include long oil, very long oil and medium oil alkyd resins e.g. derived from 45 to 85 wt% of fatty acids, such as derived from 45 to 70 wt% of fatty acids. As used herein, the term "long oil alkyd" refers to alkyd with an oil content of between 60 and 75 wt%, and a fatty acid content of 57 to 70 wt%. As used herein, the term "medium oil alkyd" refers to alkyd with an oil content of between 45 wt% and 60 wt%, and a fatty acid content of 42 to 57 wt%. As used herein, the term "very long oil alkyd" refers to alkyd with an oil content of between 75 and 85 wt%, and a fatty acid content of 70 to 80 wt%. The alkyd may comprise a medium oil alkyd. The alkyd may comprise a long oil alkyd. The alkyd may comprise a very long oil alkyd.

The alkyd material may comprise the condensation product of soybean oil fatty acids, benzoic acid, pentaerythritol and phthalic anhydride having CAS number 6722-76-3.

The composition of the long oil and medium oil alkyd may be modified. For example, polyurethane modified alkyds, silicone modified alkyds, styrene modified alkyds, acrylic modified alkyds (e.g. (meth)acrylic modified alkyds), vinylated alkyds, polyamide modified alkyds, and epoxy modified alkyds or mixtures thereof are also suitable alkyd materials.

The autoxidisable alkyd material may comprise from a medium or long oil unmodified alkyd, a silicone modified alkyd, a polyurethane modified alkyd, acrylic modified alkyd, polyamide modified alkyd, an epoxy modified alkyd, or a combination thereof. The alkyd material may comprise a long oil (unmodified) alkyd, a silicone modified alkyd, a polyurethane modified alkyd, acrylic modified alkyd, polyamide modified alkyd, an epoxy modified alkyd, or a combination thereof.

The polymeric binder may have any suitable weight average molecular weight (Mw). The polymeric binder may have a Mw of at least 200,000 g/mol, such as at least 400,000 g/mol, such as at least 600,000 g/mol, such as at least 800,000 g/mol, or even at least 1,000,000 g/mol, as determined according to ISO 16014-1.

A person skilled in the art will appreciate that techniques to measure the number average molecular weight may also be applied to measure the weight average molecular weight.

The polymeric binder may comprise at least one solvent, for example water and/or at least one alcohol.

The weight percentage contribution of a given component of a composition may be described in multiple ways. For example, the total weight percentage (wt%) of each component of a composition may be defined as the weight percentage of a given component inclusive of any solvent(s). The summation of the total weight percentage of all components of a given composition equals 100%. Alternative and/or additionally, the dry weight percentage (dry wt%) of each component of a composition may be defined as the weight percentage of a component wherein solvent(s) (which includes organic solvents and water) is removed. For the avoidance of doubt, the dry weight percentage may also be described as solids content.

The aqueous coating composition may comprise the polymeric binder in an amount from 10 wt%, such as 20 wt%, such as 30 wt%, such as 40 wt%, or even 45 wt% relative to the total weight of the aqueous coating composition.

The aqueous coating composition may comprise the polymeric binder in an amount up to 90 wt%, such as 80 wt%, such as 70 wt%, such as 60 wt%, or even 55 wt% relative to the total weight of the aqueous coating composition.

The aqueous coating composition may comprise the polymeric binder in an amount from 10 to 90 wt%, such as from 20 to 80 wt%, such as from 30 to 70 wt%, such as from 40 to 60 wt%, or even 45 to 55 wt% relative to the total weight of the aqueous coating composition.

The aqueous coating composition may comprise the polymeric binder in an amount from 5 dry wt%, such as 7.5 dry wt%, such as 10 dry wt%, such as 12.5 dry wt%, or even 15 dry wt% relative to the total dry weight of the aqueous coating composition.

The aqueous coating composition may comprise the polymeric binder in an amount up to 45 dry wt%, such as 40 dry wt%, such as 35 dry wt%, such as 30 dry wt%, or even 25 dry wt% relative to the total dry weight of the aqueous coating composition.

The aqueous coating composition may comprise the polymeric binder in an amount from 10 to 90 dry wt%, such as from 20 to 80 dry wt%, such as from 30 to 70 dry wt%, such as from 40 to 60 dry wt%, or even 45 to 55 dry wt% relative to the total dry weight of the aqueous coating composition.

*Alkali-soluble Oligomer*

The aqueous coating composition comprises an alkali-soluble oligomer. The alkali-soluble oligomer may comprise at least one acrylic material, such as an acrylic material as described above.

The alkali-soluble oligomer may comprise at least one modified acrylic material. For example, the alkali-soluble oligomer may comprise at least one polyurethane-acrylic material, at least one styrene-acrylic material, and/or at least one alkyd-acrylic material.

The alkali-soluble oligomer may have a weight average molecular weight (Mw) from 500 g/mol, such as from 1,000 g/mol, such as from 2,000 g/mol, such as from 5,000 g/mol, such as from 10,000 g/mol, or even from 15,000 g/mol, as determined according to ISO 16014-1.

The alkali-soluble oligomer may have a Mw up to 200,000 g/mol, such as up to 100,000 g/mol, such as up to 50,000 g/mol, such as up to 40,000 g/mol, such as up to 30,000 g/mol, or even up to 25,000 g/mol, as determined according to ISO 16014-1.

The alkali-soluble oligomer may have a Mw in the range of from 500 to 200,000 g/mol, such as from 1,000 to 100,000 g/mol or 2,000 to 50,000 g/mol, such as from 5,000 to 40,000 g/mol, such as from 10,000 to 30,000 g/mol, or even from 15,000 to 25,000 g/mol, as determined according to ISO 16014-1.

The alkali-soluble oligomer may have an acid value (AV) from 160 mg KOH/g polymer, such as from 180 mg KOH/g polymer, such as from 200 mg KOH/g polymer, or even from 210 mg KOH/g polymer, as determined according to DIN EN ISO 2114.

The alkali-soluble oligomer may have an AV of up to 300 mg KOH/g polymer, such as up to 280 mg KOH/g polymer, such as up to 260 mg KOH/g polymer, or even up to 240 mg KOH/g polymer, as determined according to DIN EN ISO 2114.

The alkali-soluble oligomer may have an AV in the range from 160 to 300 mg KOH/g polymer, such as from 180 to 280 mg KOH/g polymer, such as from 200 to 260 mg KOH/g polymer, such as from 210 to 240 mg KOH/g polymer, as determined according to DIN EN ISO 2114.

As reported herein, the acid value (AV) expressed on solids was determined by titration with 0.1 M methanolic potassium hydroxide (KOH) solution. A sample of solid polymer (0.1 to 3 g depending on acid number) was weighed accurately into a conical flask and is dissolved, using light heating and stirring as appropriate, in 25 ml of dimethyl formamide containing phenolphthalein indicator. The solution was then cooled to room temperature and titrated with the 0.1 M methanolic potassium hydroxide solution. The resulting acid number is expressed in units of mg KOH/g and is calculated using the following equation:

$$Acid\ value\ (AV) = \frac{titre\ of\ KOH\ soln\ (ml) \times molarity\ KOH\ soln\ (M) \times 56.1}{weight\ of\ solid\ sample\ (g)}$$

The aqueous coating composition may comprise the alkali-soluble oligomer in an amount up to 5 wt%, such as up to 4 wt%, such as up to 3 wt%, such as up to 2 wt%, or even up to 1 wt% relative to the total weight of the aqueous coating composition.

The aqueous coating composition may comprise the alkali-soluble oligomer in an amount of at least 0.05 wt%, such as at least 0.1 wt%, such as at least 0.15 wt%, such as at least 0.2 wt%, or even at least 0.25 wt% relative to the total weight of the aqueous coating composition.

The aqueous coating composition may comprise the alkali-soluble oligomer in an amount from 0.05 to 5 wt%, such as from 0.1 to 4 wt%, such as from 0.15 to 3 wt%, such as from 0.2 to 2 wt%, or even from 0.25 to 1 wt% relative to the total weight of the aqueous coating composition.

The aqueous coating composition may comprise the alkali-soluble oligomer in an amount up to 2.5 dry wt%, such as up to 2 dry wt%, such as up to 1.5 dry wt%, such as up to 1 dry wt%, or even up to 0.5 dry wt% relative to the total dry weight of the aqueous coating composition.

The aqueous coating composition may comprise the alkali-soluble oligomer in an amount of at least 0.025 dry wt%, such as at least 0.05 dry wt%, such as at least 0.075 dry wt%, such as at least 0.1 dry wt%, or even at least 0.125 dry wt% relative to the total dry weight of the aqueous coating composition.

The aqueous coating composition may comprise the alkali-soluble oligomer in an amount from 0.025 to 2.5 dry wt%, such as from 0.05 to 2 dry wt%, such as from 0.075 to 1.5 dry wt%, such as from 0.1 to 1 dry wt%, or event 0.125 to 0.5 dry wt% relative to the total dry weight of the aqueous coating composition.

*Additive(s)*

The aqueous coating composition may include at least one additive. Suitable additives include, but are not limited to the following: catalysts, pigments and pigment pastes, fillers, stabilizers, thixotropic agents, anti-sagging agents, anti-oxidants, anti-gelling agents, bactericides, fungicides, algaecides, antisettling agents, antifoaming agents, slip agents, flow and levelling agents, rheological modifiers, photoinitiators, UV-absorbers, synergists, HALS-radical scavengers, corrosion inhibitors, matting agents, waxes, mineral oils, flame retardants, anti-static agents, loss of dry inhibitors, optical brighteners, adhesion promoters, diluents, elastomers, plasticizers, air release agents, desiccants, anti-crater additives, reinforcing agents, dispersing aids, substrate wetting agents, odorants, corrosion-inhibitive pigments, additional hardeners and additional curable compounds, surface active agents, such as any of the well-known anionic, cationic or non-ionic surfactants or dispersing agents, depending on the application. Examples of suitable additives that may be added to the coating composition may be found in Additives Guide, Paint & Coatings Magazine, May 2006, hereby incorporated by reference.

In particular, the at least one additive may be selected from the group consisting of matting agents, waxes, rheology modifiers, thickeners, defoamers, alcohols, emulsifiers, biocides, anti-corrosion agents, wetting agents, coalescing agent, extenders, and solvents.

The aqueous coating composition may comprise additives in total in an amount of 0 wt%, or at least 0.1 wt%, such as at least 1 wt%, such as at least 2 wt%, such as at least 3 wt%, or even at least 4 wt% relative to the total weight of the aqueous coating composition.

The aqueous coating composition may comprise additives in total in an amount up to 30 wt%, such as up to 28 wt%, such as up to 26 wt%, such as up to 24 wt% such as up to 22 wt%, or even up to 20 wt% relative to the total weight of the aqueous coating composition.

The aqueous coating composition may comprise additives in total in an amount from 0 to 30 wt%, such as from 0.1 to 28 wt%, such as from 1 to 26 wt%, such as from 2 to 24 wt%, such as from 3 to 22 wt%, or even from 4 to 20 wt% relative to the total weight of the aqueous coating composition.

The aqueous coating composition may comprise additives in total in an amount of 0 dry wt%, or at least 0.01 dry wt%, such as at least 0.1 dry wt%, such as at least 0.5 dry wt%, or even at least 1 dry wt% relative to the total dry weight of the aqueous coating composition.

The aqueous coating composition may comprise additives in total in an amount up to 21 dry wt%, such as up to 19 dry wt%, such as up to 17 dry wt% such as up to 15 dry wt%, or even up to 13 dry wt% relative to the total dry weight of the aqueous coating composition.

The aqueous coating composition may comprise additives in total in an amount from 0 to 21 dry wt%, such as from 0.01 to 19 dry wt%, such as from 0.1 to 17 dry wt%, such as from 0.5 to 15 dry wt%, or even from 1 to 13 dry wt% relative to the total dry weight of the aqueous coating composition.

*Further aspects*

The aqueous coating composition may also further comprise at least one pigment.

The pigment component of the aqueous coating composition may comprise one or more inorganic or organic, transparent or non-transparent pigments. Non-limiting examples of such pigments are titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, quinacridones and diketo-pyrrolopyrroles; and extender pigments including ground and crystalline silica, barium sulfate, magnesium silicate, calcium silicate, mica, micaceous iron oxide, calcium carbonate, zinc oxide, aluminum hydroxide, aluminum silicate and aluminum silicate, gypsum, feldspar, talcum, kaolin, and the like. The amount of pigment that is used to form the aqueous coating composition is understood to vary, depending on the particular composition application, and can be zero when a clear composition is desired.

The aqueous coating composition may comprise at least one pigment in an amount of 0 wt%, or at least 5 wt%, such as at least 10 wt%, such as at least 15 wt% relative to the total weight of the aqueous coating composition.

The aqueous coating composition may comprise at least one pigment in an amount up to 50 wt%, such as up to 40 wt%, such as up to 30 wt%, or even up to 25 wt% relative to the total weight of the aqueous coating composition.

The aqueous coating composition may comprise at least one pigment in an amount from 0 to 50 wt%, such as from 5 to 40 wt%, such as from 10 to 30 wt%, or even from 15 to 25 wt% relative to the total weight of the aqueous coating composition.

The skilled person will understand that pigments are typically provided as solids and therefore the wt% contribution of the at least one pigment may be identical to the dry wt%.

The coating composition is an aqueous coating composition, meaning that the polymer, oligomer, and any other ingredients including optional additives are dispersed or dissolved in a liquid phase which contains water as a component, such as the main component. It will be appreciated that other liquids may be present in the liquid phase, such as organic liquids.

The coating composition may comprise water and/or a solvent. The coating composition may comprise water and/or a single solvent or a mixture of solvents. The coating composition may comprise water, an organic solvent, a mixture of water and an organic solvent or a mixture of organic solvents. The coating composition may comprise water and an organic solvent or water and a mixture of organic solvents.

Suitable organic solvents include, but are not limited to the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO (RTM) trade name; alcohols such as ethanol; n-propanol; isopropanol; n-butanol; pentanol; amyl alcohol; 1-methoxy-2-propanol; and butoxy ethanol; ketones such as acetone; cyclohexanone; methylisobutyl ketone; methyl ethyl ketone; esters such as ethyl acetate; butyl acetate; n-hexyl acetate; RHODIASOLV (RTM) RPDE (a blend of succinic and adipic esters commercially available from Rhodia); glycols such as butyl glycol; propylene glycol; glycol ethers such as methoxypropanol; ethylene glycol monomethyl ether; ethylene glycol monobutyl ether; those available from Dow under the DOWANOL (RTM) trade name, such as DOWANOL PM, DOWANOL DPM and DOWANOL PPH, for example; and combinations thereof.

The aqueous coating composition may comprise any suitable amount of water and/or solvent.

The aqueous coating composition may comprise water and/or solvent in an amount of at least 10 wt%, such as at least 11 wt%, such as at least 12 wt%, such as at least 13 wt%, such as at least 14 wt%, such as at least 15 wt%, such as at least 16 wt%, such as at least 17 wt%, such as at least 18 wt%, relative to the total weight percentage of the aqueous coating composition.

The aqueous coating composition may comprise water and/or solvent in an amount up to 75 wt%, such as up to 70 wt%, such as up to 65 wt%, such as up to 60 wt%, such as up to 55 wt%, such as up to 50 wt%, such as up to 45 wt%, such as up to 40 wt%, such as up to 35 wt% relative to the total weight percentage of the aqueous coating composition.

The aqueous coating composition may comprise water and/or solvent in an amount from 10 to 75 wt%, such as from 11 to 70 wt%, such as from 12 to 65 wt%, such as from 13 to 60 wt%, such as from 14 to 55 wt%, such as from 15 to 50 wt%, such as from 16 to 45 wt%, such as from 17 to 40 wt%, such as from 18 to 35 wt% water and/or solvent relative to the total weight percentage of the aqueous coating composition.

The aqueous coating composition may have any suitable total solids content. The aqueous coating composition may have a total solids content in an amount of at least 10 dry wt%, such as at least 20 dry wt%, such as at least 30 dry wt%, such as at least 40 dry wt%, such as at least 45 dry wt%.

The aqueous coating composition may have a total solids content in an amount up to 80 dry wt%, such as up to 75 dry wt%, such as up to 70 dry wt%, such as up to 65 dry wt%, or even up to 60 dry wt%.

The aqueous coating composition may have a total solids content in an amount from 10 to 80 dry wt%, such as from 20 to 75 dry wt%, such as from 30 to 70 dry wt%, such as from 40 to 65 dry wt%, or even from 45 to 60 dry wt%.

Acrylic dispersions may be stabilized by a stabilizing agent. The stabilizing agent may comprise one or more of many options commonly known the person skilled in the art. For example, an acrylic dispersion may be stabilized by a stabilizing agent, where the stabilizing agent comprises a surfactant. The stabilizing agent may comprise a conventional surfactant. The stabilizing agent may comprise a reactive surfactant. For example, an acrylic dispersion may be stabilized using a stabilizing agent, wherein the stabilizing agent comprises a polymeric surfactant, such as a reactive polymeric surfactant.

When the aqueous coating composition comprises an acrylic binder, the acrylic binder may comprise a surfactant stabilized acrylic binder, such as a conventional surfactant stabilized acrylic binder.

The aqueous coating composition may comprise at least one drying agent. Drying agents are commonly divided into three main classes according to their catalytic activity: primary driers, coordination driers, and secondary driers.

When the aqueous coating composition is oxidatively drying or autoxidisable, the aqueous coating composition may suitably comprise one or more drying agent. Autoxidisable alkyd resins are long-established binder polymers for film-forming coating compositions acknowledged for their aesthetic properties, low surface tension (which enables the wetting of and adhesion on a wide variety of substrates and facilitates pigment wetting), applicability by various techniques, and cost-effectiveness. Autoxidisable alkyd resins comprise drying or semi-drying unsaturated fatty acids or oils, which are chemically grafted to the polyester backbone composed of polyols and polycarboxylic acids. When the coating composition is applied to a substrate, the drying process starts by solvent evaporation and the unsaturated fatty acid side chains of the binder undergo autoxidation and subsequently form cross-links between the polymer chains resulting in a solid and coherently dried film. The drying process of autoxidisable alkyd resins takes place in the presence of oxygen under ambient or forced drying conditions, whereby the presence of oxygen is essential. The time for such compositions to dry depends on the concentration and type of unsaturated oil or fatty acids used to prepare the resin. Autoxidation and crosslinking of the unsaturated oil/fatty acid side chains can proceed unaided, but the time for drying is generally found to be unacceptably long for many practical applications. The curing is significantly accelerated by the addition of a metal-based drying catalyst, commonly referred to as a "drier" or "siccative".

Primary drying agents typically include carboxylates of transition metals such as cerium (Ce), cobalt (Co), copper (Cu), iron (Fe), manganese (Mn), and vanadium (V), which have at least two accessible valence states. In the radical curing process, the decomposition of the fatty acid peroxides catalyzed by metal ions generate fatty acid oxide radicals and fatty acid peroxide radicals. In this process, the metal catalyst is recurrently converted from the lower to the higher oxidation state and back again.

Primary drying agents based on iron ligand complexes containing tetradentate, pentadentate or hexadentate nitrogen donor ligands have been developed as alternatives to cobalt based drying agents for air-drying alkyd resins. Those iron based primary drying agents have shown improved drying behaviour under ambient conditions, and higher initial whiteness and lower yellowing tendency compared to other technologies.

The aqueous coating composition may comprise at least one primary drying agent. The primary drying agent may comprise at least one metal ligand complex wherein the metal is selected from the group consisting of cerium (Ce), cobalt (Co), copper (Cu), iron (Fe), manganese (Mn), and vanadium (V). The primary metal drying agent may comprise at least one nitrogen donor ligand. The nitrogen donor ligand may be selected from the group comprising tridentate, tetradentate, pentadentate and hexadentate nitrogen donor ligands.

Secondary driers are metal driers that exist in a single oxidation state and are not catalytically active by themselves. However, secondary driers may affect the rate-of-dry by interacting with the primary drying agent. Typical secondary driers may be selected from calcium (Ca), barium (Ba), zinc (Zn), potassium (K), zirconium (Zr), and/or lithium (Li) metal soaps.

The aqueous coating composition may comprise at least one secondary drying agent. The secondary drying agent may comprise metal soaps wherein the metal is select from the group comprising or consisting of calcium (Ca), barium (Ba), zinc (Zn), potassium (K), zirconium (Zr), and/or lithium (Li).

The aqueous coating composition may have an open time, as determined according to ASTM D7488-11, that is at least 10% longer, such as at least 20% longer, such as at least 30% longer, such as at least 40% longer, such as at least 50% longer, such as at least 60% longer than a reference formulation, wherein the reference formulation is the same composition but without the alkali-soluble oligomer.

The aqueous coating composition may have an open time, as determined according to ASTM D7488-11, that is at least 20% longer than a reference formulation, wherein the reference formulation is the same composition but without the alkali-soluble oligomer and said reference formulation has an open time as determined according to ASTM D7488-11 and is less than or equal to 5 minutes.

The aqueous coating composition may have an open time, as determined according to ASTM D7488-11, that is at least 10% longer than a reference formulation, wherein the reference formulation is the same composition but without the alkali-soluble oligomer and said reference formulation has an open time as determined according to ASTM D7488-11 and is greater than 5 minutes.

For the avoidance of doubt, open time, as determined according to ASTM D7488-11 (2016), is reported herein as the time elapsed when the "X" marks become visible (see point 7.10 of said method).

The aqueous coating composition may have an open time, as determined according to ASTM D7488-11, of at least 3 minutes, such as at least 6 minutes, such as at least 9 minutes, such as at least 12 minutes, or even at least 15 minutes.

### *Substrate*

There is also provided a substrate having a coating on at least a portion of thereon, wherein said coating is derivable from an aqueous coating composition according to the present disclosure.

The substrate may comprise an architectural feature such as a window frame, door frame, architectural beam, skirting, architrave, door, wall, ceiling, floor, or column.

The aqueous coating composition may have a value of levelling, as determined according to ASTM D4062-11, higher than a reference formulation, wherein the reference formulation is the same composition but without the alkali-soluble oligomer. Levelling as described herein is determined according to ASTM D4062-11, is a value on a scale of 0 to 10, where 0 corresponds to very poor levelling and 10 corresponds to perfect levelling or no perceptible ridges.

### *Method*

There is also provided a method for coating a substrate comprising applying to at least a portion of a substrate an aqueous coating composition according to the disclosure herein and allowing or causing the coating composition to cure to form a coating.

Any known method can be used to apply the coating compositions to a substrate. Non-limiting examples of such application methods are spreading (e.g., with paint pad or doctor blade, or by brushing or rolling), spraying (e.g., air-fed spray, airless spray, hot spray, and electrostatic spray), flow coating (e.g., dipping, curtain coating, roller coating, and reverse roller coating), and electrodeposition. (See generally, R. Lambourne, Editor, Paint and Surface Coating: Theory and Practice, Eilis Horwood, 1987, page 39 et seq.).

The aqueous coating composition may be applied to any suitable dry film thickness.

The aqueous coating composition may be applied to a dry film thickness from at least 0.1 microns ($\mu$m), such as from at least 10 $\mu$m, such as from at least 15 $\mu$m, such as from at least 20 $\mu$m, such as at least 25 $\mu$m, or even at least 30 $\mu$m.

The aqueous coating composition may be applied to a dry film thickness up to 100 $\mu$m, such as up to 90 $\mu$m, such as up to 80 $\mu$m, such as up to 70 $\mu$m, such as 60 $\mu$m, or even up to 50 $\mu$m.

The aqueous coating composition may be applied to a dry film thickness from 0.1 to 100 $\mu$m, such as from 10 to 90 $\mu$m, such as from 15 to 80 $\mu$m, such as from 20 to 70 $\mu$m, such as from 25 to 60 $\mu$m, or even from 30 to 50 $\mu$m.

The substrate may be selected from the group consisting of: wood, paper, foam, and synthetic materials (such as plastics), leather, textiles, glass, ceramic, metals, concrete, cement, brick, such as wood, optionally wherein the substrate is pre-treated or pre-coated, for example, such as pre-coated wood.

### *Use*

There is also provided the use of an alkali-soluble oligomer having an acid value (AV) of greater than 160 mg KOH/g to extend the open time, as determined by ASTM D7488-11, of an aqueous coating composition comprising a polymeric binder, an alkali-soluble oligomer, and optionally at least one additive.

As used herein, unless otherwise expressly specified, all numbers such as those expressing values, ranges, amounts or percentages may be read as if prefaced by the word "about", even if the term does not expressly appear. Also, the recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Singular encompasses plural and vice versa. For example, although reference is made herein to "a" polymeric binder, "an" alkali-soluble oligomer, and the like, one or more of each of these and any other components can be used. As used herein, the term "polymer" refers to oligomers and both homopolymers and copolymers, and the prefix "poly" refers to two or more.

The word "comprising" and forms of the word "comprising" as used in this description and in the claims does not limit the present disclosure claimed to exclude any variants or additions.

The terms "comprising", "comprises" and "comprised of" as used herein are synonymous with "including", "includes" or "containing", "contains", and are inclusive or open-ended and do not exclude additional, non-recited members, elements or method steps. Additionally, although the present disclosure has been described in terms of "comprising", the coating compositions detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

All of the features contained herein may be combined with any of the above aspects in any combination.

**Examples**

For a better understanding of the invention, and to show how embodiments of the same may be carried into effect, reference will now be made, by way of example, to the following examples.

Test Methods

*Open Time*

The open time was determined using standard test method ASTM D7488-11. Open time as defined herein is the length of time a paint remains "wet" or "open" enough to allow for brush-in and repair. Open time reported herein is the time elapsed when the "X" marks become visible (see point 7.10 of ASTM D7488-11).

Open time improvement herein is defined as the open time according to ASTM D7488-11 of a composition comprising the alkali-soluble oligomer according to the present invention compared to the open time according to ASTM D7488-11 of the same composition without alkali-soluble oligomer. Open time improvement is thus described in terms of percentage (%).

*Molecular weight*

The weight average molecular weight (Mw) was determined according to ISO 16014-1.

*Acid value*

The acid value (AV) was determined according to DIN EN ISO 2114 and is expressed on solids. It was determined by titration with 0.1 M methanolic potassium hydroxide (KOH) solution. A sample of solid polymer (0.1 to 3 g depending on acid number) was weighed accurately into a conical flask and is dissolved, using light heating and stirring as appropriate, in 25 ml of dimethyl formamide containing phenolphthalein indicator. The solution was then cooled to room temperature and titrated with the 0.1 M methanolic potassium hydroxide solution. The resulting acid number is expressed in units of mg KOH/g and was calculated using the following equation:

$$Acid\ value = \frac{titre\ of\ KOH\ soln\ (ml) \times molarity\ KOH\ soln\ (M) \times 56.1}{weight\ of\ solid\ sample\ (g)}$$

Examples

Several examples and comparative examples are described hereunder illustrating the effect of the compositions according to the present invention.

Unless otherwise indicated, all parts and all percentages in the following examples, as well as throughout the specification, are parts by weight or percentages by weight respectively. The following test methods were used to evaluate the coatings prepared according to the invention.

The following components were used:

Binder 1: An aqueous dispersion (42 wt% solids) of an acrylic-alkyd hybrid binder.
Binder 2: An aqueous dispersion (46 wt% solids) of a (meth)acrylic acid ester based copolymer.
Binder 3: An aqueous dispersion (40 wt% solids) of acrylic polymers.
Binder 4: An aqueous dispersion (40 wt% solids) of a polyester-polyurethane binder.
Alkali soluble oligomer: An aqueous dispersion (27.5 wt% solids) of a styrene-acrylic oligomer.

Base paints 1 to 3 were prepared by mixing the constituents listed in Table 1.

The solids content of base paints 1 to 3 are listed in Table 2.

**Table 1** - **Base paint formulations**

| Component | Base Paint 1 (wt%) | Base Paint 2 (wt%) | Base Paint 3 (wt%) |
|---|---|---|---|
| Binder 1 (alkyd-acrylic) | 59.00 | - | - |
| Binder 2 (acrylic dispersion) | - | 59.00 | - |
| Binder 3 (acrylic dispersion) | - | - | 49.50 |
| Binder 4 (polyurethane dispersion) | - | - | 7.00 |
| Pigment | 24.00 | 24.00 | 19.10 |
| Water | 9.10 | 8.18 | 7.15 |
| Rheology modifiers | 3.38 | 3.34 | 4.31 |
| Dispersant | 2.19 | 2.19 | 1.27 |
| Coalescing agent | 0.98 | 2.00 | 3.60 |
| Defoamer | 0.80 | 0.84 | 1.10 |
| Biocide | 0.36 | 0.36 | 0.45 |
| Drier | 0.10 | - | - |
| Surfactant | 0.05 | 0.05 | 0.92 |
| pH regulator | 0.03 | 0.03 | - |
| Glycol ether | - | - | 3.00 |
| Waxes | - | - | 2.00 |
| Matting agent | - | - | 0.60 |
| **Total (wt%)** | **100.00** | **100.00** | **100.00** |

**Table 2** - **Base paint formulations**

| Component | Base Paint 1 (dry wt%) | Base Paint 2 (dry wt%) | Base Paint 3 (dry wt%) |
|---|---|---|---|
| Binder 1 (alkyd-acrylic) | 24.78 | - | - |
| Binder 2 (acrylic dispersion) | - | 27.14 | - |
| Binder 3 (acrylic dispersion) | - | - | 19.77 |
| Binder 4 (polyurethane dispersion) | - | - | 2.80 |
| Pigment | 23.88 | 23.88 | 19.00 |
| Water | 0.00 | 0.00 | 0.00 |
| Rheology modifiers | 0.87 | 1.02 | 0.94 |
| Dispersant | 1.68 | 1.68 | 0.94 |
| Coalescing agent | 0.00 | 1.99 | 3.10 |
| Defoamer | 0.72 | 0.77 | 0.26 |
| Biocide | 0.05 | 0.05 | 0.19 |
| Drier | 0.00 | - | - |

(continued)

| Component | Base Paint 1 (dry wt%) | Base Paint 2 (dry wt%) | Base Paint 3 (dry wt%) |
|---|---|---|---|
| Surfactant | 0.01 | 0.01 | 0.78 |
| pH regulator | 0.00 | 0.00 | - |
| Glycol ether | - | - | 0.00 |
| Waxes | - | - | 0.70 |
| Matting agent | - | - | 0.58 |
| **Total (dry wt%)** | **51.99** | **56.54** | **49.06** |

Examples 1 to 5 (Ex. 1 to Ex. 5) and comparative examples 1 to 3 (Comp. Ex. 1 to Comp. Ex. 3) were prepared by mixing together, as described in Table 3, the base paint, as described in Table 1, with (Ex. 1 to Ex. 5) or without (Comp. Ex. 1 to Comp. Ex. 3) the alkali-soluble oligomer according to the invention.

**Table 3 - Aqueous coating compositions**

| Component | Comp. Ex. 1 | Ex. 1 | Comp. Ex. 2 | Ex. 2 | Comp. Ex. 3 | Ex. 3 | Ex. 4 | Ex. 5 |
|---|---|---|---|---|---|---|---|---|
| FORMULATIONS | | | | | | | | |
| Base Paint 1 (wt%) | 100.00 | 98.00 | - | - | - | - | - | - |
| Base Paint 2 (wt%) | - | - | 100.00 | 98.00 | - | - | - | - |
| Base Paint 3 (wt%) | - | - | - | - | 100.00 | 98.00 | 99.00 | 99.50 |
| Alkali-soluble oligomer (wt%) | - | 2.00 | - | 2.00 | - | 2.00 | 1.00 | 0.50 |
| Total (wt%) | 100.00 | 100.00 | 100.00 | 100.00 | 100.00 | 100.00 | 100.00 | 100.00 |
| C HARACTE RISTICS | | | | | | | | |
| Open time (min) | 11 | 13 | 3 | 5 | 8 | 13 | 11 | 10 |
| Open time improvement (%) | - | 18% | - | 67% | - | 63% | 38% | 25% |

The results show that the aqueous coating compositions according to the invention perform as good as, or better than, those of the comparative examples. In particular, the coatings of the examples according to the invention have improved open time compared to the coatings of the comparative examples.

**Claims**

1. An aqueous coating composition comprising:

   (a) a polymeric binder;
   (b) an alkali-soluble oligomer;
   (c) optionally at least one additive;

   wherein the alkali-soluble oligomer has an acid value (AV) of from 160 to 300 mg KOH/g.

2. An aqueous coating composition according to claim 1 wherein the polymeric binder comprises one or more of an acrylic material, a polyurethane material, a vinyl acetate material, a polyurethane-acrylic material, an epoxy material, a styrene-acrylic material, a styrene-butadiene material, a polystyrene material, a vinyl-acrylic material, and/or a vinyl acetate-ethylene material.

3. An aqueous coating composition according to any of the preceding claims wherein the polymeric binder comprises one or more of an alkyd material and/or an alkyd-acrylic material.

4. An aqueous coating composition according to any of the preceding claims wherein the alkali-soluble oligomer has a weight average molecular weight (Mw) in the range of from 500 to 200,000 g/mol, such as from 1,000 to 100,000 g/mol or 2,000 to 50,000 g/mol, such as from 5,000 to 40,000 g/mol, such as from 10,000 to 30,000 g/mol, or even from 15,000 to 25,000 g/mol.

5. An aqueous coating composition according to any of the preceding claims wherein the alkali-soluble oligomer has an acid value (AV) of greater than 160 mg KOH/g polymer, such as greater than 180 mg KOH/g polymer, such as greater than 200 mg KOH/g polymer, or even greater than 210 mg KOH/g polymer.

6. An aqueous coating composition according to any of the preceding claims wherein the alkali-soluble oligomer has an acid value (AV) of less than 300 mg KOH/g polymer, such as less than 280 mg KOH/g polymer, such as less than 260 mg KOH/g polymer, or even less than 240 mg KOH/g polymer.

7. An aqueous coating composition according to any of the preceding claims wherein the amount of alkali-soluble oligomer is less than 2.5 dry wt%, such as less than 2 dry wt%, such as less than 1.5 dry wt%, such as less than 1 dry wt%, such as less than 0.5 dry wt% based on the solids weight of the alkali-soluble oligomer compared to the total solids weight of the aqueous coating composition.

8. An aqueous coating composition according to any of the preceding claims wherein the at least one additive (c) is selected from the group consisting of matting agents, waxes, rheology modifiers, thickeners, defoamers, alcohols, emulsifiers, biocides, anti-corrosion agents, wetting agents, drying agents, coalescing agent, extenders, and solvents.

9. An aqueous coating composition according to claim 3 wherein the at least one additive (c) comprises at least one drying agent, wherein the at least one drying agent comprises at least one primary drying agent and/or at least one secondary drying agent.

10. An aqueous coating composition according to any of the preceding claims wherein the open time, as determined according to ASTM D7488-11, is at least 10% longer, such as at least 20% longer, such as at least 30% longer, such as at least 40%, such as at least 50% longer, such as at least 60% longer than a reference formulation, wherein the reference formulation is the same composition but without the alkali-soluble oligomer (b).

11. An aqueous coating composition according to any of the preceding claims wherein the open time, as determined according to ASTM D7488-11, is at least 3 minutes, such as at least 6 minutes, such as at least 9 minutes, such as at least 12 minutes, or even at least 15 minutes.

12. An aqueous coating composition according to any of the preceding claims wherein the composition further comprises at least one pigment.

13. A method for coating a substrate comprising applying to a substrate an aqueous coating composition according to any of claims 1 to 12.

14. A method according to claim 13 wherein the substrate is selected from the group consisting of: wood, paper, foam, and synthetic materials (such as plastics), leather, textiles, glass, ceramic, metals, concrete, cement, brick, such as wood, optionally wherein the substrate is pre-treated or pre-coated, for example, such as pre-coated wood.

15. A substrate having a coating thereon, the coating being derived from an aqueous coating composition according to any of claims 1 to 12.

16. A substrate according to claim 15, wherein the substrate is an architectural feature such as a window frame, door frame, architectural beam, skirting, architrave, door, wall, ceiling, floor, or column.

17. Use of an alkali-soluble oligomer having an acid value (AV) of greater than 160 mg KOH/g to extend the open time, as determined by ASTM D7488-11, of an aqueous coating composition, the aqueous coating composition comprising a polymeric binder and optionally at least one additive.

Europäisches
Patentamt

European
Patent Office

Office européen
des brevets

# EUROPEAN SEARCH REPORT

**Application Number**

**EP 23 18 6743**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/128875 A1 (AKZO NOBEL COATINGS INT BV [NL]; THIEL DETLEF [DE]; BUSS IRENE [DE]) 7 December 2006 (2006-12-07) * claims 1-10; examples 1-3; page 2 line 5 and lines 1-16; page 11 lines 4-11, 17-19; page 13 lines 29-30 * | 1-16 | INV. C09D5/00 C09D5/02 C09D7/40 |
| X | WO 2018/075762 A1 (VALSPAR SOURCING INC [US]) 26 April 2018 (2018-04-26) * claims 1-44; claim 18; paragraph [0046]; paragraphs [0093,0094]; examples 1-20 * | 1-17 | |
| X | WO 2018/010825 A1 (AKZO NOBEL COATINGS INT BV [NL]) 18 January 2018 (2018-01-18) * claims 1-15; page 5 lines 4-14; page 9 lines 9-28; examples on page 9 ff. (paint no. 1-22, tables 1-5) * | 1-17 | |
| X | WO 2012/130817 A1 (NUPLEX RESINS BV [NL]; AKKERMAN JAAP MICHIEL [NL] ET AL.) 4 October 2012 (2012-10-04) * claims 1-20; paragraph [0031]; paragraph [0058]; paragraphs [0065, 0066]; examples 1-11 * | 1-17 | TECHNICAL FIELDS SEARCHED (IPC) C09D |
| X | WO 2021/133873 A1 (PPG IND OHIO INC [US]) 1 July 2021 (2021-07-01) * claims 1-22; paragraphs [0086-0093]; paragraphs [0023-0027]; coating examples 1-14 * | 1,4-16 | |

The present search report has been drawn up for all claims

| Place of search | Date of completion of the search | Examiner |
|---|---|---|
| Munich | 17 January 2024 | Kositza, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 6743

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2024

| Patent document cited in search report | | | Publication date | Patent family member(s) | | | Publication date |
|---|---|---|---|---|---|---|---|
| WO 2006128875 | A1 | | 07-12-2006 | AR | 057050 | A1 | 14-11-2007 |
| | | | | AT | E474890 | T1 | 15-08-2010 |
| | | | | AU | 2006254152 | A1 | 07-12-2006 |
| | | | | BR | PI0613519 | A2 | 18-01-2011 |
| | | | | CA | 2611131 | A1 | 07-12-2006 |
| | | | | CN | 101189310 | A | 28-05-2008 |
| | | | | DK | 1885805 | T3 | 25-10-2010 |
| | | | | EP | 1885805 | A1 | 13-02-2008 |
| | | | | ES | 2349052 | T3 | 22-12-2010 |
| | | | | US | 2008221268 | A1 | 11-09-2008 |
| | | | | WO | 2006128875 | A1 | 07-12-2006 |
| WO 2018075762 | A1 | | 26-04-2018 | BR | 112019007974 | A2 | 09-07-2019 |
| | | | | CA | 3040511 | A1 | 11-05-2018 |
| | | | | CN | 109844016 | A | 04-06-2019 |
| | | | | CN | 109863210 | A | 07-06-2019 |
| | | | | CN | 111247218 | A | 05-06-2020 |
| | | | | EP | 3529310 | A1 | 28-08-2019 |
| | | | | EP | 3529317 | A1 | 28-08-2019 |
| | | | | EP | 3697859 | A1 | 26-08-2020 |
| | | | | EP | 4053225 | A1 | 07-09-2022 |
| | | | | JP | 6940605 | B2 | 29-09-2021 |
| | | | | JP | 2020500233 | A | 09-01-2020 |
| | | | | US | 2019249029 | A1 | 15-08-2019 |
| | | | | US | 2020056066 | A1 | 20-02-2020 |
| | | | | US | 2020248003 | A1 | 06-08-2020 |
| | | | | US | 2023390802 | A1 | 07-12-2023 |
| | | | | WO | 2018075762 | A1 | 26-04-2018 |
| | | | | WO | 2018085052 | A1 | 11-05-2018 |
| | | | | WO | 2019078925 | A1 | 25-04-2019 |
| WO 2018010825 | A1 | | 18-01-2018 | BR | 112018077447 | A2 | 02-04-2019 |
| | | | | CN | 109415587 | A | 01-03-2019 |
| | | | | EP | 3484968 | A1 | 22-05-2019 |
| | | | | PL | 3484968 | T3 | 11-01-2021 |
| | | | | RU | 2760514 | C1 | 25-11-2021 |
| | | | | US | 2019185704 | A1 | 20-06-2019 |
| | | | | WO | 2018010825 | A1 | 18-01-2018 |
| | | | | ZA | 201900033 | B | 25-09-2019 |
| WO 2012130817 | A1 | | 04-10-2012 | AU | 2012234321 | A1 | 26-09-2013 |
| | | | | CN | 103443146 | A | 11-12-2013 |
| | | | | EP | 2655450 | A1 | 30-10-2013 |
| | | | | TW | 201245357 | A | 16-11-2012 |
| | | | | US | 2014005322 | A1 | 02-01-2014 |
| | | | | US | 2020157375 | A1 | 21-05-2020 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

**EP 23 18 6743**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-01-2024**

| Patent document cited in search report | Publication date | Patent family member(s) | | Publication date |
|---|---|---|---|---|
| | | WO | 2012130817 A1 | 04-10-2012 |
| WO 2021133873 A1 | 01-07-2021 | CN | 115151593 A | 04-10-2022 |
| | | EP | 4081574 A1 | 02-11-2022 |
| | | US | 2023036598 A1 | 02-02-2023 |
| | | WO | 2021133873 A1 | 01-07-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 6722-76-3
- *Additives Guide, Paint & Coatings Magazine*, May 2006
- Paint and Surface Coating: Theory and Practice. Eilis Horwood, 1987, 39